# EUROPÄISCHE PATENTSCHRIFT

(11) **EP 1 260 793 B1**
(45) Veröffentlichungstag und Bekanntmachung des Hinweises auf die Patenterteilung: **20.01.2010**
(21) Anmeldenummer: 02008796.1
(22) Anmeldetag: 19.04.2002
(51) Int. Cl.: G01C 21/34

(54) **Verfahren zur Routenplanung mit einem Navigationssystem**
Method for route planning with a navigation system
Méthode de plannification de route avec un system de navigation

(30) Priorität: 15.05.2001 DE 10123623
(43) Veröffentlichungstag der Anmeldung: 27.11.2002
(73) Patentinhaber: ROBERT BOSCH GMBH, 70442 Stuttgart (DE)
(72) Erfinder: Fischer, Martin, 61184 Karben (DE); Schreiner, Joerg, 81667 München (DE)

(56) Entgegenhaltungen:
- DE-A- 19 611 915
- DE-A- 19 859 078
- US-A- 5 465 088

## Beschreibung

Die Erfindung betrifft ein Verfahren zur Routenplanung mit einem Navigationssystem, wobei eine Zieladresse zur Auswahl eines Ziels eingegeben wird.

Navigationssysteme für Kraftfahrzeuge sind hinreichend bekannt, mit denen der Fahrer nach Eingeben einer Zieladresse in einer vom Navigationssystem berechneten und vorgeschlagenen Fahrtroute zu dem eingegebenen Ziel geführt wird. Zur Bestimmung der Ausgangsposition und der Ist-Position des Fahrzeuges haben die Navigationssysteme in der Regel ein Ortungssystem.

Zur Festlegung eines Ziels bestehen für den Nutzer in herkömmlichen Navigationssystemen folgende Möglichkeiten:
a) Eingabe einer vollständigen Beschreibung des Ziels in Textform, wobei die Beschreibung einen Orts- und Straßennamen umfasst und gegebenenfalls mit zusätzlichen Informationen wie Postleitzahl, Stadtteil oder Straßenkreuzung ergänzt ist;
b) Eingabe einer vollständigen Beschreibung wie im Punkt a), jedoch mit unvollständigen oder teilweise fehlenden Angaben, wobei eine anschließende Auswahl in einer resultierenden Auswahlliste erfolgt. Ein Ziel kann z.B. durch Eingeben von Anfangsbuchstaben erfolgen, mit denen der Ortsname oder der Straßenname beginnt;
c) Auswahl einer Adresse oder eines markanten Punktes mit Hilfe eines Cursors auf einer am Bildschirm angezeigten Landkarte;
d) Auswahl der Zieladresse aus einem Adressspeicher.

Zur Festlegung der Zieladresse muss der Nutzer hierbei eine relativ lange Bedienprozedur ausführen. Dieser Prozess verlängert sich wesentlich, falls zusätzlich zur reinen Auswahl des Ziels auch noch Routenspezifikationen über die gewünschte Route verlangt werden. Die Routenspezifikationen beinhalten Kriterien für den Routenverlauf, wie z.B. geschätzter Zeitbedarf für die Route, geschätzte Streckenlänge für die Route, ein Ausschluss oder eine Einschränkung von bestimmten Strekkentypen, wie z.B. Fährverbindungen, gebührenpflichtige Straßen, Autobahnen oder Schnellstraßen sowie eine Erweiterung oder Modifikation der vom Navigationssystem ermittelten Route durch den Benutzer z.B. durch Angabe von auf dem Weg zum Ziel anzufahrenden Strekkenpunkten (sogenannte Zwischenziele), die Auswahl abzufahrender Strecken oder die Umgehung von bekannten Staugebieten. Mit Hilfe der Routenkriterien werden die prinzipiell möglichen Wege optimiert und die Anzahl der Routen eingeschränkt. Es ist nämlich zu berücksichtigen, dass die Topologie eines existierenden Straßennetzes eine mit der Anzahl der Kreuzungen exponentiell steigende Anzahl von möglichen schleifenfreien Routen zwischen zwei Punkten ermöglicht. Die Eingabe von Routenkriterien ist daher nahezu unerlässlich, um eine automatische Routenberechnung zu ermöglichen. Die Anzahl der Routenkriterien nimmt mit der Leistungsfähigkeit eines Navigationssystems zu. Dabei beschränkt jede Verfeinerung der Routenspezifikation die Berechnungsmöglichkeiten für die Route und passt die Route immer genauer den Benutzerwünschen an.

Aus der DE 196 119 15 A1 ist ein Verfahren zur Routenplanung und Zielführung von Fahrzeugen bekannt, bei dem in einer Zentrale eine Routenplanung auf eine Benutzeranfrage hin stattfindet. Neben einer Start- und Zielkoordinate können für die Routenberechnung durch den Benutzer weitere Optimierungskriterien für die Routenberechnung vorgegeben werden.

Aus der DE 198 59 078 A1 ist ein Verfahren zur Leitung eines Führens eines Fahrzeugs von mindestens einem Start zu mindestens einem Zielpunkt bekannt. Um bestimmte Fahrstrecken bei der Routenplanung auszuschließen, kann ein Fahrer eine Eigenschaft für einen potenziell zu meidenden Streckenabschnitt, beispielsweise Streckenabschnitte mit Straßenbenutzungsgebühr, für die Routenplanung vorgeben.

Aus der US 5,465,088 ist ein Empfänger für Verkehrsinformationen bekannt, der auch zur Fahrtroutenberechnung ausgelegt ist. Um einem Fahrer stets eine schnellste Fahrstrecke zu einem Fahrziel zu ermöglichen, werden Streckenabschnitte mit einer bestimmten Länge mit einem Multiplikationsfaktor hinterlegt, der eine Durchfahrtsgeschwindigkeit für den jeweiligen Streckenabschnitt darstellt, um einen Algorithmus für eine kürzeste Fahrtroute dann auf die so modifizierte Karte anwenden zu können.

Aufgabe der Erfindung war es daher, ein verbessertes Verfahren zur Routenplanung mit einem Navigationssystem zu schaffen.

Die Aufgabe wird durch das Verfahren mit den Merkmalen des Hauptanspruchs gelöst mit den Schritten:
- Auslesen einer Routenspezifikation mit Kriterien für den Routenverlauf in Abhängigkeit von der Zieladresse;
- Korrelation der Zieladresse mit der ausgelesenen zielabhängigen Routenspezifikation zur Berechnung einer Route.

Erfindungsgemäß werden Routenspezifikationen zieladressenabhängig in einem Routenspezifikationsspeicher abgelegt. Bei Eingabe einer Zieladresse können dann die zugehörigen Routenspezifikationen automatisch ausgelesen und mit der Zieladresse zur Berechnung einer Route korreliert werden. Auf diese Weise kann das Navigationssystem automatisch auf Routenspezifikationen zugreifen, ohne dass der Nutzer diese aufwendig eingeben muss.

Wenn eine neue im Navigationssystem nicht gespeicherte Zieladresse eines neuen Ziels eingegeben wird, ist es vorteilhaft, die Zieladresse in einem Adressspeicher abzuspeichern und nach der Eingabe von nutzerabhängigen Routenspezifikationen für das neue unbekannte Ziel diese Routenspezifikationen mit einem Verweis auf die Zieladresse abzuspeichern. Auf diese Weise entsteht ein selbstlernendes Navigationssystem.

Das Abspeichern der eingegebenen Routenspezifikationen kann optional sein oder automatisch erfolgen.

Das Erzeugen einer Routenspezifikation für eine neue Zieladresse erfolgt besonders vorteilhaft durch
- Auswerten der abgespeicherten Routenspezifikationen durch Korrellation der Routen abgespeicherter Ziele mit den Routen für das neue Ziel, und
- Übernahme von Kriterien aus den abgespeicherten Routenspezifikationen für die zu erzeugende Routenspezifikation.

Dieses Verfahren hat den Vorteil, dass eine Vielzahl von Kriterien für Routenspezifikationen ohne Eingabe durch den Nutzer automatisch erfolgt, was zu einer erheblichen Verkürzung der Bedienschritte führt.

Vorteilhaft ist es auch, nutzerabhängig gespeicherte typische Kriterien von Routenspezifikationen bei der Eingabe von Routenspezifikationen durch den Nutzer vorzugeben. Diese können dann entweder übernommen oder durch den Nutzer abgeändert werden.

Als Kriterien für Routenspezifikationen können z.B. Zwischenziele, Verkehrswegkategorien, Routenlänge, Fahrtlänge und/oder Fahrtkosten vorgesehen sein.

Die Erfindung wird nachfolgend anhand der beigefügten Zeichnung näher erläutert. Es zeigt:

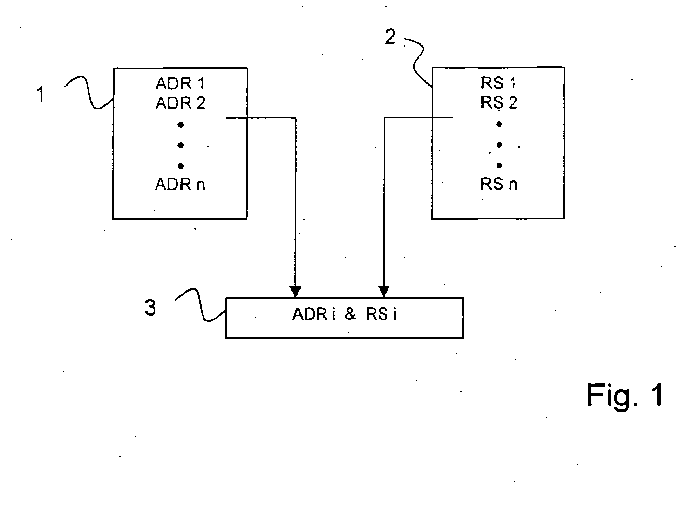

- Figur 1 -: Blockdiagramm des erfindungsgemäßen Verfahrens zur Routenplanung mit einem Adressspeicher und einem Routenspezifikationsspeicher.

Die Figur 1 lässt ein Blockdiagramm des erfindungsgemäßen Verfahrens zur Routenplanung mit einem Navigationssystem erkennen, das einen Adressspeicher 1 und einen Routenspezifikationsspeicher 2 beinhaltet. In dem Adressspeicher 1 sind eine Vielzahl von Zieladressen ADRₙ in bekannter Weise abgelegt, wobei n ein ganzzahliger Index ist. In dem Routenspezifikationsspeicher 2 sind eine Vielzahl von Routenspezifkationen RSₙ abgelegt, die beliebige Kriterien für eine Routenauswahl umfassen, wie z.B. Zwischenziele, Verkehrswegkategorien (Fährverbindung, Autobahn, Mautstrecken etc.), Routenlänge, Fahrtlänge, Fahrtkosten etc., wobei n ein ganzzahliger Index ist.

Zur Routenplanung wird vom Nutzer in bekannter Weise eine Zieladresse ADR in das Navigationssystem eingegeben, um ein Ziel auszuwählen. Die Bestimmung des aktuellen Standorts kann z.B. mit Hilfe bekannter Ortungsverfahren, wie z.B. GPS, erfolgen. Mit Hilfe einer im Navigationssystem verfügbaren Straßenkarte werden nun die möglichen Routen zwischen Standort und Ziel ermittelt. Zur Auswahl geeigneter Routen aus der Vielzahl möglicher Routen wird nun in Abhängigkeit von der eingebenen Zieladresse ADRᵢ eine damit verknüpfte Routenspezifikation RSᵢ aus dem Routenspeicher 2 ausgelesen und miteinander korrelliert. Durch die Verknüpfung von Zieladresse ADR und zieladressabhängiger Routenspezifikation RS können früher definierte Kriterien zur Routenplanung vorzugsweise nutzerabhängig wiederverwendet werden, ohne dass es einer erneuten Eingabe von Routenspezifikationen RS bedarf.

Der Inhalt des Adressspeichers 1 und des Routenspezifikationsspeichers 2 wird vom Nutzer angepasst und erweitert. Sobald eine neue unbekannte Zieladresse ADR eingegeben wird, wird diese in dem Adressspeicher 1 abgelegt und die eingegebene nutzerabhängige Routenspezifikation RS für das neue unbekannte Ziel in dem Routenspezifikationsspeicher abgelegt. Der Index n wird hierbei inkrementiert. Dieses Abspeichern erfolgt vorzugsweise automatisch.

Bei dem Eingeben einer neuen Routenspezifikation RS werden die bereits abgespeicherten Routenspezifikationen RS vorzugsweise ausgewertet und geeignete mit dem neuen Ziel und der damit verbundenen Route annähernd übereinstimmende Kriterien für die zu erzeugende Routenspezifikation RS übernommen. Hierbei können vom Nutzer zudem allgemeine Kriterien vorgegeben werden, die bei jeder Routenspezifikation RS zu berücksichtigen sind. Hierdurch werden die Bedienschritte zur Eingabe von Kriterien für neue Routenspezifikationen RS erheblich verkürzt und die Verkehrssicherheit erhöht, da sich der Fahrer schneller wieder auf den Verkehr konzentrieren kann.

Das Navigationssystem hat vorzugsweise ein Einstellmenü mit einer Programm-Option zur Verfeinerung der Route. Diese Option kann einoder ausgeschaltet werden. Wenn eine Verfeinerung der Route erwünscht ist, erfolgt die Korrellation der Zieladresse ADR mit einer ausgelesenen zielabhängigen Routenspezifikation RS. Weiterhin kann in dem Einstellmenü eine Programm-Option zur Speicherung einer Route vorgesehen sein, die ein- oder ausgeschaltet werden kann. Wenn eine Route gespeichert werden soll, erfolgt sowohl eine Abspeicherung der neuen Zieladresse ADR der Route und der zugehörigen Routenspezifikation RS, die mit Verweis auf die neue Zieladresse ADR in dem Routenspezifikationsspeicher 2 abgelegt wird. In einem weiteren Menü kann die Auswahl einer gespeicherten Routenspezifikation RS angeboten werden.

Die Kriterien für die Routenspezifikationen RS können mit Prioritäten versehen sein. Als Kriterien können in bekannter Weise z.B. eine schnelle, kurze oder kostengünstige Route, die Nutzung von Autobahnen, landwirtschaftlichen Wegen, Forstwegen, Mautstellen, Brücken, Tunneln, Flussfähren, Eisenbahnverladungsplätzen, Luftverladungsplätzen, Schiffsverladungsplätzen sowie Zwischen- und Tourenziele enthalten.

## Patentansprüche

1. Verfahren zur Routenplanung mit einem Navigationssystem mit den Schritten:
- Eingeben einer Zieladresse (ADR) zur Auswahl eines Ziels;
**gekennzeichnet durch**
- Automatisches Auslesen einer Routenspezifikation (RS) mit Kriterien für eine Routenauswahl aus einer Vielzahl von in einem Routenspezifikationsspeicher abgelegten Routenspezifikationen in Abhängigkeit von der Zieladresse (ADR);
- Korrelation der Zieladresse (ADR) mit der ausgelesenen zielabhängigen Routenspezifikation (RS) zur Berechnung einer Route.

2. Verfahren nach Anspruch 1, **gekennzeichnet durch**
- Abspeichern einer neuen im Navigationssystem nicht gespeicherten Zieladresse (ADR) eines neuen Ziels in einem Adressspeicher (1);
- Eingeben einer nutzerabhängigen Routenspezifikation (RS) des neuen unbekanntes Ziels;
- Abspeichern der eingegebenen Routenspezifikation (RS) zusammen mit einem Verweis auf die Zieladresse (ADR) in dem Routenspezifikationsspeicher (2).

3. Verfahren nach Anspruch 2, **dadurch gekennzeichnet, dass** das Abspeichern der eingegebenen Routenspezifikation (RS) automatisch erfolgt.

4. Verfahren nach einem der vorhergehenden Ansprüche, **gekennzeichnet durch** Erzeugen einer Routenspezifikation (RS) für eine neue Zieladresse (ADR) mit den Schritten:
- Auswerten der abgespeicherten Routenspezifikationen (RS) **durch** Korrelation der Routen abgespeicherter Ziele mit den Routen für das neue Ziel;
- Übernahme von Kriterien aus den abgespeicherten Routenspezifikationen (RS) für die zu erzeugende Routenspezifikation (RS).

5. Verfahren nach Anspruch 2, **gekennzeichnet durch** Vorgabe von nutzerabhängig gespeicherten typischen Kriterien von Routenspezifikationen (RS) bei der Eingabe von Routenspezifikationen (RS) **durch** den Nutzer.

6. Verfahren nach einem der vorhergehenden Ansprüche, **dadurch gekennzeichnet, dass** Kriterien für Routenspezifikationen (RS) Zwischenziele, Verkehrswegkategorien, Routenlänge, Fahrtlänge und/oder Fahrtkosten sind.

7. Navigationssystem mit einer programmgesteuerten Rechnereinheit, **gekennzeichnet durch** einen Adressspeicher (1) zum Abspeichern von Zieladressen (ADR), einen Routenspezifikationsspeicher (2) zum Abspeichern von zielabhängigen Routenspezifikationen (RS), wobei die Recheneinheit ausgelegt ist zum Automatischen Auslesen einer Routenspezifikation (RS) mit Kriterien für eine Routenauswahl aus einer Vielzahl von in dem Routenspezifikationsspeicher abgelegten Routenspezifikationen in Abhängigkeit von einer eingegebenen Zieladresse (ADR) und zur Korrelation der Zieladresse (ADR) mit der ausgelesenen zielabhängigen Routenspezifikation (RS) zur Berechnung einer Route.

## Claims

1. Method for route planning with a navigation system having the following steps:
- input of a destination address (ADR) for the selection of a destination;
**characterized by**
- automatic reading of a route specification (RS) with criteria for a route selection from a multiplicity of route specifications, stored in a route specification memory, on the basis of the destination address (ADR);
- correlation of the destination address (ADR) with the read destination-dependent route specification (RS) for the purpose of calculating a route.

2. Method according to Claim 1, **characterized by**
- storage of a new destination address (ADR), not stored in the navigation system, for a new destination in an address memory (1);
- input of a user-dependent route specification (RS) for the new unknown destination;
- storage of the input route specification (RS) together with a reference to the destination address (ADR) in the route specification memory (2).

3. Method according to Claim 2, **characterized in that** the input route specification (RS) is stored automatically.

4. Method according to one of the preceding claims, **characterized by** production of a route specification (RS) for a new destination address (ADR) having the following steps:
- evaluation of the stored route specifications (RS) by correlation of the routes for stored destinations with the routes for the new destination;
- acceptance of criteria from the stored route specifications (RS) for the route specification (RS) which is to be produced.

5. Method according to Claim 2, **characterized by** selection of typical criteria, stored on a user-dependent basis, for route specifications (RS) to any input of route specifications (RS) by the user.

6. Method according to one of the preceding claims, **characterized in that** criteria for route specifications (RS) are interim destinations, public road categories, route length, journey length and/or journey costs.

7. Navigation system with a program-controlled computer unit, **characterized by** an address memory (1) for storing destination addresses (ADR), a route specification memory (2) for storing destination-dependent route specifications (RS), wherein the computer unit is designed to automatically read a route specification (RS) with criteria for a route selection from a multiplicity of route specifications stored in the route specification memory on the basis of an input destination address (ADR) and to correlate the destination address (ADR) with the read destination-dependent route specification (RS) for the purpose of calculating a route.

## Revendications

1. Procédé de planification d'itinéraire à l'aide d'un système de navigation, le procédé comprenant l'étape qui consiste à :
- introduire une adresse de destination (ADR) pour sélectionner une destination,
**caractérisé par** les étapes qui consistent à :
- en fonction de l'adresse de destination (ADR), lire automatiquement une spécification d'itinéraire (RS) qui satisfait à des critères de sélection d'itinéraire parmi plusieurs spécifications d'itinéraire conservées dans une mémoire de spécifications d'itinéraire et
- en fonction de la destination, corréler l'adresse de destination (ADR) à la spécification d'itinéraire (RS) lue, pour calculer un itinéraire.

2. Procédé selon la revendication 1, **caractérisé par** les étapes qui consistent à :
- placer dans une mémoire d'adresses (1) une nouvelle adresse de destination (ADR) d'une nouvelle destination non encore conservée en mémoire dans le système de navigation,
- faire introduire par l'utilisateur une spécification d'itinéraire (RS) de la nouvelle destination inconnue,
- placer dans la mémoire (2) de spécifications d'itinéraire la spécification d'itinéraire (RS) introduite, en même temps qu'un renvoi à l'adresse de destination (ADR).

3. Procédé selon la revendication 2, **caractérisé en ce que** la mise en mémoire de la spécification d'itinéraire (RS) introduite s'effectue automatiquement.

4. Procédé selon l'une des revendications précédentes, **caractérisé par** la formation d'une spécification d'itinéraire (RS) pour une nouvelle adresse de destination (ADR), par les étapes qui consistent à :
- évaluer les spécifications d'itinéraire (RS) conservées en mémoire en corrélant les itinéraires de destination conservés en mémoire aux itinéraires de la nouvelle destination et
- reprendre les critères des spécifications d'itinéraire (RS) conservées en mémoire pour former la spécification d'itinéraire (RS).

5. Procédé selon la revendication 2, **caractérisé par** la définition de critères typiques conservés en mémoire en fonction de l'utilisateur pour des spécifications d'itinéraire (RS) lors de l'introduction de spécifications d'itinéraire (RS) par l'utilisateur.

6. Procédé selon l'une des revendications précédentes, **caractérisé en ce que** les critères de spécification d'itinéraire (RS) sont des destinations intermédiaires, des catégories de voies de circulation, la longueur des itinéraires, la durée de conduite et/ou le coût de déplacement.

7. Système de navigation doté d'une unité de calcul commandée par programme, **caractérisé par** une mémoire d'adresses (1) qui conserve des adresses de destination (ADR) et par une mémoire (2) de spécifications d'itinéraire qui conserve des spécifications d'itinéraire (RS) en fonction de destinations,
l'unité de calcul étant conçue pour lire automatiquement une spécification d'itinéraire (RS) avec des critères de sélection d'itinéraire parmi plusieurs spécifications d'itinéraire conservées dans la mémoire de spécifications d'itinéraire en fonction d'une adresse de destination (ADR) introduite et pour corréler en fonction de l'itinéraire l'adresse de destination (ADR) à la spécification d'itinéraire (RS) lue, pour calculer un itinéraire.
